# DEMANDE DE BREVET EUROPEEN

(11) **EP 1 815 937 A1**
(43) Date de publication de la demande: **08.08.2007**
(21) Numéro de dépôt: 06300116.8
(22) Date de dépôt: 07.02.2006
(51) Int. Cl.: B23K 26/38, B23K 26/40, B23K 26/14, B23K 103/14

(54) **Procédé de coupage par faisceau laser d'une pièce en titane à l'aide d'un mélange gazeux Ar/He**

(71) Demandeur: Air Liquide Espana SA, 28046 Madrid (ES); L'AIR LIQUIDE, Société Anonyme pour l'Etude et l'Exploitation des Procédés Georges Claude, 75007 Paris (FR)
(72) Inventeur: Suzon, Serge, 28045, MADRID (ES)
(74) Mandataire: Pittis, Olivier

(57) **Abrégé**

L'invention porte sur un procédé de coupage par faisceau laser d'une pièce en titane ou en alliage de titane avec mise en oeuvre d'un gaz d'assistance en faisceau laser, dans lequel ledit gaz d'assistance est un mélange d'argon et d'hélium.

## Description

L'invention porte sur un procédé de coupage par faisceau laser du titane et des alliages de titane utilisant un gaz d'assistance formé d'un mélange d'argon et d'hélium.

Le titane et ses alliages sont des métaux non-ferreux qui possèdent des caractéristiques métallurgiques et mécaniques particulières notamment du fait de leurs faibles masses volumiques, qui est par exemple de l'ordre de 4,5 g/cm³ pour le titane. Les propriétés du titane sont très recherchées en particulier pour des applications de haute technologie.

Par ailleurs, en coupage laser CO₂, à une puissance d'au moins 1,5 kW et/ou à une densité de puissance d'au moins 1 MW/cm², la haute densité d'énergie du faisceau laser focalisé tend à vaporiser localement la matière de la pièce à couper.

Selon les conditions, la vapeur métallique se transforme localement en un plasma qui est susceptible de se propager au gaz de coupe environnant. Les plasmas métalliques et gazeux peuvent alors absorber une partie de l'énergie incidente et donner lieu à un défaut de puissance dans la saignée de coupe, ce qui conduit inévitablement à la formation d'un défaut de coupe, notamment à des bavures à la face inférieure de la saignée de coupe.

De ce fait, toute condition favorisant la formation d'un plasma est considérée comme un facteur limitant pour le procédé de découpe laser, notamment en termes de vitesse de coupe et de flexibilité de réglage.

Or, le titane et les alliages de titane présentent une haute sensibilité à l'oxygène (oxydation, combustion) ainsi qu'à l'azote (nitruration).

Pour éviter de tels problèmes, l'argon est généralement utilisé pour la découpe thermique du titane et de ses alliages.

Or, l'argon est un gaz qui s'ionise facilement puisque son potentiel d'ionisation est de l'ordre de 15.4 eV, de sorte qu'il constitue un facteur limitant pour le procédé de découpe laser car il s'ionise très rapidement et perturbe alors le procédé de coupe.

Par conséquent, la découpe laser de forte puissance (>1,5 kW et/ou 1 MW/cm²) avec une source de type CO₂ de longueur d'onde de l'ordre de 10.6 µm, mettant en oeuvre de l'argon en tant que gaz assistance du faisceau Iser, c'est-à-dire gaz de coupe, n'est pas efficace.

Il a déjà été proposé de remplacer l'argon par de l'hélium car l'énergie que requiert l'hélium pour s'ioniser est très supérieure à celle de l'argon, à savoir de l'ordre de 24.5 eV.

De là, l'utilisation de l'hélium comme gaz de coupe peut être efficace mais à condition d'utiliser des débits importants. En effet, la molécule d'hélium est de petite taille et l'impact dynamique du gaz dans la saignée de coupe pour les débits de gaz usuels n'est pas très performant.

Ainsi, la découpe sous hélium à débit très important permet de conserver des conditions cinétiques du jet de coupe efficaces.

Cependant, augmenter le débit d'hélium est économiquement nuisible au procédé du fait du coût élevé de l'hélium, ce qui conduit nombre d'utilisateurs à rejeter cette solution.

Partant de là, le problème qui se pose est de proposer un procédé de coupage par laser du titane et des alliages de titane ne présentant pas les problèmes et inconvénients susmentionnés, notamment qui conduise à une découpe efficace d'une pièce en titane ou en un alliage de titane, c'est-à-dire sans ou avec un minimum de bavures et à une vitesse de coupe compatible avec une utilisation à l'échelle industrielle, par exemple une vitesse d'au moins 3 à 4 m/min pour une épaisseur de 2,5 mm, et qui soit économiquement acceptable pour l'utilisateur.

La solution de l'invention est un procédé de coupage par faisceau laser d'une pièce en titane ou en alliage de titane avec mise en oeuvre d'un gaz d'assistance du faisceau laser, caractérisé en ce que ledit gaz d'assistance est un mélange d'argon et d'hélium.

Selon le cas, le procédé de l'invention peut comprendre l'une ou plusieurs des caractéristiques suivantes :
- le faisceau laser est obtenu au moyen d'un générateur laser de type CO₂, Nd :YAG, à diodes ou à fibres.
- le mélange gazeux contient de 20 à 80 % en volume d'argon et/ou le mélange gazeux contient de 20 à 80 % en volume d'hélium.
- le mélange gazeux contient de 30 à 70 % en volume d'argon et/ou le mélange gazeux contient de 30 à 70 % en volume d'hélium.
- le mélange gazeux est formé uniquement d'argon et d'hélium.
- le mélange gazeux est constitué de 40 à 60 % en volume d'argon et le reste d'hélium.
- le mélange gazeux est constitué de 50 % d'argon et de 50 % d'hélium.
- le faisceau laser a une puissance d'au moins 1 kW, de préférence de 1,5 à 20 kW.
- la pièce à couper est une plaque ayant une épaisseur comprise entre 0,5 mm et 4 mm, de préférence d'au moins 1 mm.
- la vitesse de coupe est d'au moins 2 m/min, de préférence entre 3 et 10 m/min, avantageusement d'au moins 4 m/min.
- le faisceau laser est généré par une source laser de type CO₂ ou une source laser à fibre d'ytterbium.
- la pression du gaz de coupe est comprise entre 5 bar et 20 bar et/ou le débit du gaz de coupe est compris entre 5 et 75 m³/h.
- le mélange gazeux d'argon et d'hélium peut être pré-mélangé avant son introduction dans la tête de coupage ou alors le mélange peut se faire in situ par mélange d'un gaz avec l'autre, dans la tête de coupage ou en sortie de celle-ci, par exemple via un double flux de gaz dont les gaz sont distribués concentriquement l'un à l'autre avant de se mélanger dans les proportions souhaitées pour obtenir le mélange He/Ar désiré. Dans ce dernier cas, les deux gaz qui se mélangent l'un à l'autre peuvent être des gaz 'purs', par exemple de l'argon, d'une part, et de l'hélium, d'autre part, ou alors des mélanges gazeux Ar/He de même composition ou de compositions différentes se mélangeant dans la tête de coupage ou en sortie de celle-ci.

Le principe de l'invention est donc d'augmenter le potentiel d'ionisation du gaz de coupe, en utilisant un mélange argon/hélium comme gaz d'assistance pour la découpe laser CO₂ de forte puissance. L'addition de l'hélium au gaz d'assistance tend à diminuer le potentiel d'ionisation du gaz tout en conservant le potentiel dynamique du jet de gaz de coupe.

L'invention peut s'appliquer à tout autre type de sources laser susceptibles d'induire des plasmas parasites dans le gaz de coupe. En effet, lors d'essais comparatifs de coupage laser de titane avec de hélium et de l'argon, on s'est aperçu que ce qui limite la vitesse de coupe avec de l'hélium était l'apparition de petites bavures en bas de saignée de coupe résultant d'une vitesse de coupe trop élevée, alors qu'en présence d'argon, les défauts de coupe résultent essentiellement de l'apparition d'un plasma dans la saignée de coupe.

Par ailleurs, des débits 3 fois plus importants ont été nécessaires pour l'hélium par rapport à ceux mis en oeuvre en présence d'argon.

Au vu de cela, on en a déduit qu'un gaz d'assistance à 100 % en volume d'hélium n'est pas nécessaire et qu'un mélange argon/hélium peut suffire à éliminer ou minimiser l'apparition du plasma à la vitesse de coupe optimum, à savoir la vitesse maximale possible permettant d'obtenir une découpe du titane sans bavure.

Le mélange argon/hélium doit être choisi en fonction de conditions de coupe telles que la puissance laser et la géométrie de pièce à couper. Ceci peut être fait empiriquement par l'utilisateur.

Dans tous les cas, utiliser un mélange argon/hélium pour découper du titane ou un alliage de titane selon l'invention permet de bénéficier à la fois des avantages de l'hélium et de ceux de l'argon mais sans avoir les inconvénients rencontrés lors de l'utilisation de ces gaz seuls.

Afin de valider ces observations, l'inventeur de la présente invention a réalisé les essais comparatifs ci-après.

Ces essais ont visé à déterminer, pour différents mélanges argon/hélium, ainsi qu'à titre comparatif, pour de l'argon pur, la puissance maximale admissible par la saignée de coupe et la vitesse de coupe correspondante en fonction de critères de qualité recherchés, tels que rugosité, bavures fines, perte de coupe ou coupe de mauvaise qualité du fait de brûlures, d'apparition d'un plasma dans le gaz de protection ...

Ces essais de coupage ont été réalisés avec un dispositif laser de type CO₂ de 3 kW de la société TRUMPF, sur une plaque de titane de 2,5 mm d'épaisseur, et avec 4 gaz de coupe différents (% en volume), à savoir :
- Essai A : argon pur
- Essai B : mélange 70 % Ar + 30 % He
- Essai C : mélange 50 % Ar + 50 % He
- Essai D : mélange 30 % Ar + 70 % He

Les autres conditions d'essais et les résultats d'essais obtenus sont corrigés dans les tableaux 1 et 2 ci-après :

**Tableau 1**

| Conditions d'essais | Essai A | Essai B | Essai C | Essai D |
|---|---|---|---|---|
| Puissance (W) | 810 | 1080 | 1260 | 2565 |
| Densité de puissance évaluée (kW/cm²) | 1147 | 1530 | 2294 | 3633 |
| Vitesse de coupe (m/min) | 1,6 | 2,2 | 3,3 | 5,2 |
| Point focal (mm) | 4 | | | |
| Pression (bar) | 12 | | | |
| Diamètre buse (mm) | 1,4 | | | |
| Débit du gaz (m³/h) | 12 | 20 | 25 | 30 |
| Consommation gaz par mètre coupé (l/m) | 125 | 150 | 126 | 96 |

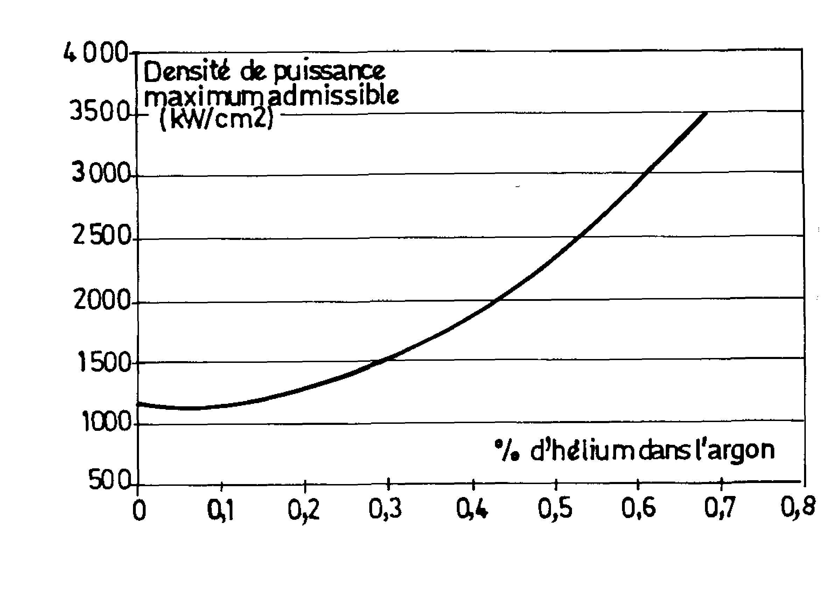

En outre, la figure ci-annexée montre la densité de puissance maximale admissible obtenue durant ces essais par rapport à la teneur en hélium dans le mélange gazeux Ar/He.

Comme on le voit, les essais démontrent qu'augmenter la proportion d'hélium permet d'accroître la puissance admissible par la pièce, ce qui donne lieu à une vitesse de coupe plus élevée. Cet accroissement permet, à partir de 50 % d'hélium en volume, de réduire la consommation de gaz d'assistance au mètre linéaire. Comparativement à l'argon, la souplesse de réglage se note dès l'introduction de 30 % d'hélium en volume. Enfin, la limite en puissance et vitesse de coupe à 70 % d'hélium a été atteinte en raison de fines bavures, ce qui souligne un léger excès d'hélium.

II ressort donc clairement de ces essais que la mise en oeuvre de mélanges hélium/argon permet de bénéficier à la fois des avantages de l'hélium et de ceux de l'argon. A ce titre, la flexibilité de réglage apparaît dès l'introduction de 30 % hélium et la puissance maximum a été atteinte pour un taux d'hélium de l'ordre de 70 % d'hélium en volume.

De plus, l'utilisation de mélange Ar/He selon l'invention conduit à une diminution du phénomène d'apparition des plasmas, une augmentation de vitesse de coupe, une réduction de la quantité d'hélium utilisé et donc de celle du débit de gaz d'assistance.

Dans le tableau 2 ci-après sont indiqués la vitesse maximale de coupe et le pourcentage (%) de la puissance laser maximale à partir duquel apparaît un plasma néfaste dans le gaz de coupe pour les 4 mélanges A à D testés.

**Tableau 2**

| Essai n° | Vitesse de coupe (m/min) | Pourcentage de puissance laser (%) |
|---|---|---|
| A | 1,8 | 35 |
| B | 2,45 | 50 |
| C | 3,6 | 65 |
| D | 5,2 | 100 |

Comme on le voit, l'argon pur (Essai A) ne permet pas de dépasser une vitesse de coupe de 1,8 m/min, alors que les mélanges selon l'invention permettent non seulement d'augmenter la vitesse de coupe mais aussi la puissance laser utilisable.

## Revendications

1. Procédé de coupage par faisceau laser d'une pièce en titane ou en alliage de titane avec mise en oeuvre d'un gaz d'assistance du faisceau laser, **caractérisé en ce que** ledit gaz d'assistance est un mélange d'argon et d'hélium.

2. Procédé selon la revendication 1, **caractérisé en ce que** le faisceau laser est obtenu au moyen d'un générateur laser de type CO₂, Nd :YAG, à diodes ou à fibres.

3. Procédé selon la revendication 1 ou 2, **caractérisé en ce que** le mélange gazeux contient de 20 à 80 % en volume d'argon et/ou le mélange gazeux contient de 20 à 80 % en volume d'hélium.

4. Procédé selon la revendication 1 ou 2, **caractérisé en ce que** le mélange gazeux contient de 30 à 70 % en volume d'argon et/ou le mélange gazeux contient de 30 à 70 % en volume d'hélium.

5. Procédé selon les revendications 1 à 4, **caractérisé en ce que** le mélange gazeux est formé uniquement d'argon et d'hélium.

6. Procédé selon les revendications 1 à 5, **caractérisé en ce que** le mélange gazeux est constitué de 40 à 60 % en volume d'argon et le reste d'hélium.

7. Procédé selon les revendications 1 à 6, **caractérisé en ce que** le mélange gazeux est constitué de 50 % d'argon et de 50 % d'hélium.

8. Procédé selon les revendications 1 à 7, **caractérisé en ce que** le faisceau laser a une puissance d'au moins 1 kW, de préférence de 1,5 à 20 kW.

9. Procédé selon les revendications 1 à 8, **caractérisé en ce que** la pièce à couper est une plaque ayant une épaisseur comprise entre 0,5 mm et 4 mm, de préférence d'au moins 1 mm.

10. Procédé selon les revendications 1 à 9, **caractérisé en ce que** la vitesse de coupe est d'au moins 2 m/min, de préférence entre 3 et 10 m/min.

11. Procédé selon les revendications 1 à 10, **caractérisé en ce que** le faisceau laser est généré par une source laser de type CO₂ ou une source laser à fibre d'ytterbium.

12. Procédé selon les revendications 1 à 11, **caractérisé en ce que** la pression du gaz de coupe est comprise entre 5 bar et 20 bar et/ou le débit du gaz de coupe est compris entre 5 et 75 m³/h.

## Revendications modifiées

### Revendications modifiées conformément à la règle 86(2) CBE.

**1.** Procédé de coupage par faisceau laser d'une pièce en titane ou en alliage de titane avec mise en oeuvre d'un gaz d'assistance du faisceau laser, **caractérisé en ce que** ledit gaz d'assistance constitué d'un mélange d'argon contenant de 20 à 80 % en volume d'argon et de l'hélium pour le reste.

**2.** Procédé selon la revendication 1, **caractérisé en ce que** le faisceau laser est obtenu au moyen d'un générateur laser de type CO₂, Nd :YAG, à diodes ou à fibres.

**3.** Procédé selon la revendication 1 ou 2, **caractérisé en ce que** le mélange gazeux est constitué de 30 à 70 % en volume d'argon et de 30 à 70 % en volume d'hélium.

**4.** Procédé selon l'une des revendications 1 à 3, **caractérisé en ce que** le mélange gazeux est constitué de 40 à 60 % en volume d'argon et le reste d'hélium.

**5.** Procédé selon l'une des revendications 1 à 4, **caractérisé en ce que** le mélange gazeux est constitué de 50 % d'argon et de 50 % d'hélium.

**6.** Procédé selon l'une des revendications 1 à 5, **caractérisé en ce que** le faisceau laser a une puissance d'au moins 1 kW.

**7.** Procédé selon la revendication 6, **caractérisé en ce que** le faisceau laser a une puissance de 1,5 à 20 kW.

**8.** Procédé selon l'une des revendications 1 à 7, **caractérisé en ce que** la pièce à couper est une plaque ayant une épaisseur comprise entre 0,5 mm et 4 mm.

**9.** Procédé selon la revendication 8, **caractérisé en ce que** la pièce à couper est une plaque ayant une épaisseur d'au moins 1 mm.

**10.** Procédé selon les revendications 1 à 9, **caractérisé en ce que** la pression du gaz de coupe est comprise entre 5 bar et 20 bar et/ou le débit du gaz de coupe est compris entre 5 et 75 m³/h.

**11.** Procédé selon les revendications 1 à 10, **caractérisé en ce que** la vitesse de coupe est d'au moins 2 m/min, de préférence entre 3 et 10 m/min.

**12.** Procédé selon la revendication 1, **caractérisé en ce que** le faisceau laser est généré par une source laser à fibre d'ytterbium.
